(19) Europäisches Patentamt
European Patent Office
Office européen des brevets

(11) EP 1 808 222 A1

(12) EUROPEAN PATENT APPLICATION
published in accordance with Art. 158(3) EPC

(43) Date of publication:
18.07.2007 Bulletin 2007/29

(51) Int Cl.:
B01D 71/02 (2006.01)    B01D 53/22 (2006.01)

(21) Application number: 05770794.5

(22) Date of filing: 11.08.2005

(86) International application number:
PCT/JP2005/014727

(87) International publication number:
WO 2006/038377 (13.04.2006 Gazette 2006/15)

(84) Designated Contracting States:
AT BE BG CH CY CZ DE DK EE ES FI FR GB GR
HU IE IS IT LI LT LU LV MC NL PL PT RO SE SI
SK TR

(30) Priority: 04.10.2004 JP 2004291775

(71) Applicant: Bussan Nanotech Research Institute
Inc.
Tokyo 100-0004 (JP)

(72) Inventors:
• LIN, Suiwen,
Bussan Nanotech Research Institute Inc.
Tokyo 100004 (JP)
• IKEDA, Shiro,
Bussan Nanotech Research Institute Inc.
Tokyo 1000004 (JP)

(74) Representative: HOFFMANN EITLE
Patent- und Rechtsanwälte
Arabellastrasse 4
81925 München (DE)

(54) METHOD FOR SEPARATION OF COMPONENTS AND SEPARATION UNIT

(57) To provide a method for separating component, wherein a part of components is separated from a mixed composition which includes water and acid, without causing degression in the characteristics of the zeolite crystal is aimed for. The aim is solved by a method for separating a component from a mixed composition which includes water and organic acid such as acetic acid by using zeolite crystal, and wherein the mixed composition is brought into vapor 16; and the vapor 16 of the mixed composition is heated by a ribbon heater 13 up to a temperature of not inducing capillary condensation of the vapor 16 of the mixed composition when the vapor 16 of the mixed composition comes into contact with the zeolite crystal 11.

Fig. 5

AcOH/H2O (Normal Pressure)

EP 1 808 222 A1

**Description**

Technical Field

The present invention relates to a method for separating component and an apparatus for separating component, wherein a component is separated from a composition system which includes at least water and organic acid by using zeolite crystalline.

Background Art

Zeolites are crystalline material which has a skeletal structure of associated tetrahedrons, in each individual tetrahedron four oxygens being coordinated to a cation, and which bears minute pores of the order of angstroms.

The method for separating one component from a mixture of two or more of components by using selective absorption property or molecular sieve property of the crystalline zeolite has been widely investigated.

As such a separation method, the molecular sieve method (e.g., See, Patent Literature 1) where zeolite crystalline powder is used and separation operation is performed by an operation system which is referred to as "Pressure Swing Adsorption", or the vapor permeation method (e.g., See, Patent Literature 2) where zeolite crystalline membrane is used and separation operation is performed by providing vapor of the mixture and extracting the component which can pass through the membrane, and so on are known. Zeolite membrane where zeolite crystals are formed as a film onto the surface of a supporting member is effective for the separation of component, and it is superior to the macromolecular membranes with respect to the mechanical strength and thermal resistance.

A process where the water-soluble organic substance is concentrated by separating water from the water-soluble organic substance is among the component separation processes using the zeolite crystal and which have been widely studied. For such a process, a zeolite crystal which possesses a low Si/Al ratio, shows regular pore diameters, and enjoys a high hydrophilicity would be selected and used. As such a zeolite crystal, for instance, A type zeolite, Y type zeolite, and X type zeolite, etc., of Na substituted type are enumerated. These zeolite crystals show a high separation performance in the separation of water/organic solvent system.

Patent Literature 1: JP-10-216456A
Patent Literature 2: JP-2003-093828A

Disclosure of the Invention

Problems to be Solved by the Invention

Here, when as the water-soluble organic substance a biomass alcohol, i.e., alcohol derived from biomass such as agricultural products, is used, some acid ingredient might be contained in the mixture of the water-soluble organic substance and water.

However, the zeolite crystal with high hydrophilicity as above mentioned is sensitive to acid in general, and thus, a disadvantage that the component separation can not be stably performed will appear when such a zeolite crystal is used for separating water from the water-soluble organic substance. This is because, for instance, in the case of the Na substituted type zeolite, Na is eluted by the acid and thus the hydrophilicity is lost, and particularly, in the case of one having a Si/Al ratio of not more than 5 such as the above mentioned A type, Y type, or X type zeolite, the crystalline skeletal structure is collapsed by the elution of Na or Al in the skeletal structure, and further the crystal itself is decomposed.

Therefore, it is in fact impossible to separate water from the mixture solution including the acid component by using the zeolite crystal of high hydrophilicity as above mentioned. Moreover, although as the means for solving this problem, a method where a zeolite of the type of having comparatively high acid-resistance is used, and a method of neutralizing the solution have been proposed, a method of optimizing the process condition in order to solve the problem has not been proposed.

Accordingly, the present invention aims to provide a method for separating component and apparatus for separating component, wherein the component separation using the zeolite crystal can be stably performed for a long term, while preventing the collapse of zeolite crystalline skeletal structure and the degression in the characteristics of the zeolite crystal.

Means for Solving the Problems

The method for separating component according to the present invention is a method for separating a component from a mixed composition which includes water and organic acid by using zeolite crystal and which is characterized in that the mixed composition is brought into vapor; and the vapor of the mixed composition is heated up to a temperature of not inducing capillary condensation of the vapor of the mixed composition when the vapor of the mixed composition comes into contact with the zeolite crystal.

In the method for separating component according to the present invention, when the above mentioned zeolite crystal is a membranous zeolite, the effect of the present invention becomes remarkable. Moreover, in the method for separating component according to the present invention, to heat the zeolite crystal up to a temperature of not inducing the capillary condensation of the vapor of the mixed composition can make sure that the vapor coming into contact with the zeolite crystal is heated to a desired temperature.

The apparatus for separating component according to the present invention is an apparatus for separating a component of a mixed composition which includes water and organic acid by using zeolite crystal and which is characterized in that the zeolite crystal is membranous zeolite, and the apparatus comprises a membrane separation device which comprises the membranous zeolite and through which a component of the mixed composition selectively permeates to separate the component from the mixed composition; a vaporizing device by which the vapor of the mixed composition is produced; a vapor heating device by which the vapor of the mixed composition is heated up to a temperature of not inducing capillary condensation of the vapor of mixed composition when the vapor of the mixed composition comes in contact with the zeolite crystal.

In the apparatus for separating component according to the present invention, it is possible to heat reliably the vapor coming into contact with the zeolite crystal to a desired temperature, when the vapor heating device heats the membranous zeolite.

Effect of the Invention

According to the process for separating component of the present invention, water condensation at the surface of the zeolite crystal and capillary condensation can be prevented at least. Therefore, ionization of the organic acid included in the mixture can be prevented, and thus the collapse of zeolite crystalline skeletal structure by the organic acid can be prevented. As a result, it is possible to perform the separation of components from the mixed composition by using the zeolite crystal, while stably maintaining the characteristics of the zeolite crystal for a long term.

In the component separation method according to the present invention, when as the zeolite crystal a membranous zeolite is used, the temperature inducing the capillary condensation becomes low, or the probability of occurrence of the capillary condensation becomes low because the crystals are closely adjoined mutually. Thus, it is possible to perform the component separation stably for a long term. Moreover, in the component separation method according to the present invention, since the zeolite crystals are also subjected to heating, the temperature of the vapor falls when the vapor comes into contact with the crystals. Thus, it is possible to repress the occurrence of the capillary condensation.

The apparatus for separating component according to the present invention is an apparatus which embodies the above mentioned method for separating component, and thus it is possible to perform the separation of components from the mixed composition by using the zeolite crystal, while stably maintaining the characteristics of the zeolite crystal for a long term.

In the component separation apparatus according to the present invention, since the vapor heating device is designed so as to heat also the zeolite crystals, the temperature of the vapor falls when the vapor comes into contact with the crystals. Thus, it is possible to repress the occurrence of the capillary condensation.

(Fig.1) is a diagram showing the meniscus of liquid surface in the capillary.

(Fig. 2) is a graph showing the relation between pore size and p/ps with respect to the capillary condensation of water vapor.

(Fig. 3) is a graph showing the relation between temperature and p/ps of vapor in the water vapor of 1 atm shown in Fig. 2.

(Fig. 4) is a graph showing the relation between pore size and p/ps with respect to the capillary condensation of vapor of acetic acid solution.

(Fig. 5) is a diagram showing an embodiment of the apparatus for separating component according to the present invention.

(Fig. 6) is charts showing results of XRD analysis for LTA type zeolite powder before and after processing the vapor of acetic acid solution.

(Fig.7) is a chart showing a result of XRD analysis for LTA type zeolite powder which is boiled in acetic acid solution.

(Fig. 8) is graphs showing the ratio of acetic acid in the separated moiety and the penetration rate, respectively, versus the elapsed time, in the case that a part of components are separated from acetic acid solution by using the LTA type membranous zeolite in Example 3.

(Fig. 9) is graphs showing the ratio of acetic acid in the separated moiety and the penetration rate, respectively, versus the elapsed time, in the case that a part of components are separated from acetic acid solution by using the LTA type membranous zeolite in Control 2.

(Fig. 10) is charts showing results of XRD analysis for LTA type membranous zeolites of Example 3, Control 2 and before treating.

Explanation of Numerals

10 Apparatus for separating component
11 Membranous zeolite
12 Tube part
13 Ribbon heater
14 Thermo couple
15 Connecting to vacuum pump
16 Acetic acid / water mixed vapor
17 Vaporizing device

Best: Mode for Carrying Out the Invention

On the separation of a part of components from the mixed composition which includes water and organic acid, by adapting a consideration for the capillary condensation while using zeolite crystal which is known in the art, we, the inventors, can achieve the present invention.

That is, the method for separating component according to the present invention is a method for separating a component from a mixed composition which includes water and organic acid by using zeolite crystal and which is characterized in that the mixed composition is brought into vapor; and the vapor of the mixed composition is heated up to a temperature of not inducing the capillary condensation of the mixed composition when the vapor of the mixed composition comes into contact with the zeolite crystal.

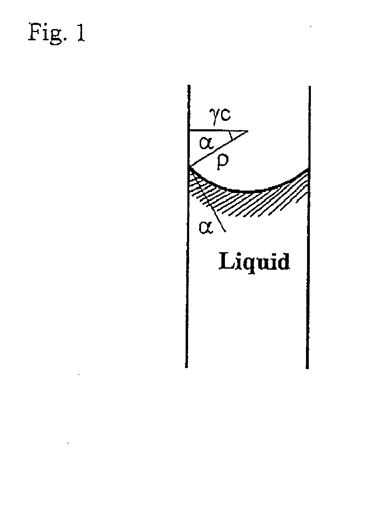

First, the capillary condensation will be illustrated as follows with reference to Figs. 1-4.

With respect to the absorptive porous solid possessing pores, various regions from a low absorptive amount region where the absorptive molecular layer is not more than a single molecular absorption to a high absorptive amount region where the presence of what is called "capillary condensation phase" is considerable are formed in the micro pores.

The membranous zeolite has regular pores, and the surface of liquid in such a pore comes to be a curved one as shown in Fig. 1 where the meniscus of liquid surface in the capillary is illustrated. Then, iL is considered that the saturated vapor pressure behaved by the liquid depends on the curvature of the surface of the liquid by virtue of surface tension. Therefore, the saturated vapor pressure of the curved surface is differ from that of the flat surface. In such a pore, gas can be condensed and becomes liquid even when the gas is in the state of not reaching the saturated vapor pressure. Critical pore radius $\gamma_c$ where the capillary condensation phase is generated is given by the following Kelvin equation (It is also called the Kelvin's capillary condensation equation, or the Thomson's equation).

(Formula 1)

$$ln(p/ps) = -2 \sigma vL \cos \alpha / (\gamma_c RT) \quad ---- \quad (Formula\ 1)$$

$\sigma$: surface tension, $vL$: liquid mole specific volume,
$\alpha$: contact angle, *ps:* saturated vapor pressure,
R: gas constant, T: absolute temperature

The Formula 1 explains the thermodynamic penetration theory of capillary condensation mechanism.

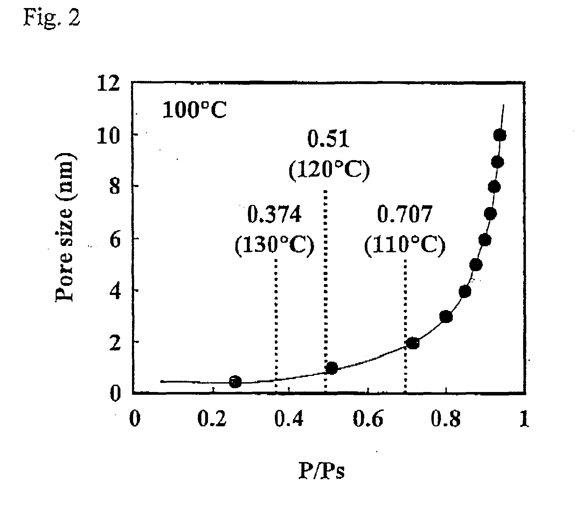

To begin with, regarding the water vapor, a graph prepared by a calculation using Formula 1 is shown in Fig. 2. Fig. 2 shows the relation between pore size $\gamma_c$ and p/ps with respect to the capillary condensation of water vapor at 100 °C under normal pressure (1 atm). In Fig. 2, the vertical axis is the pore size (nm), and the horizontal axis is the p/ps value. The side upper than a borderline shown in Fig. 2 is the range where the capillary condensation does not happen, while the side lower than the borderline is the range where the capillary condensation may happen.

Incidentally, Fig. 2 is prepared with the assumption that the surface tension $\sigma$ is 58.84 mm·N/m, the liquid mole specific volume $vL$ is 18 ml/mol, the gas constant R is 8.3143 J/mol·K, the absolute temperature T is 373 K, and $\cos \alpha$-1 because the contact angle $\alpha$ is 0°.

As shown in Fig. 2, when the water vapor of 100°C under normal pressure (under the condition of p/ps=1) passes through pores of not more than 10 nm, the capillary condensation will result. On the other hand, when the steam and the pores are heated up to 110 °C under the normal pressure condition, the p/ps becomes 0.707, and it can be said that the capillary condensation does not take place at pores of not less than 2 nm in accordance with the curve in Fig. 2.

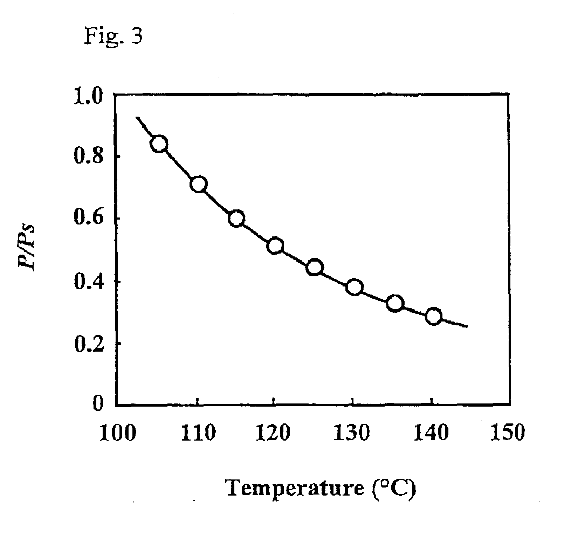

In accordance with Fig. 2, the smaller the size of pore to be contact with the water vapor, the likelier the capillary condensation takes place. However, in a system where the pressure is maintained to a predetermined level, it is possible to lower the critical pore size γc to which the capillary condensation can take place, by increasing the temperature of the water vapor, which brings the saturated vapor pressure of the water vapor itself to heighten, and brings the p/ps value to decrease. In Fig. 3, the relation between temperature (°C ; horizontal axis) and p/ps (vertical axis) of vapor in the water vapor of 1 atm is shown.

With respect to the acetic acid solution which is a mixed composition of water and the organic acid, it is also possible to make the calculation using the Formula 1.

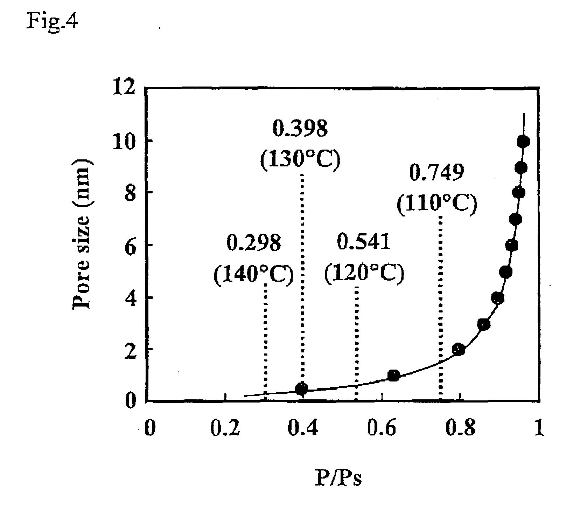

With respect to the acetic acid solution, a graph prepared by a calculation using Formula 1 is shown in Fig. 4. Fig. 4 shows the relation between pore size $\gamma_c$ and p/ps with respect to the capillary condensation for the vapor of 50 wt.% acetic acid aqueous solution which is vaporized at 105 °C under normal pressure.

Incidentally, Fig. 4 is prepared with the assumption that the surface tension σ is 26.6 mm·N/m, the liquid mole specific volume νL is 27.7 ml/mol, the gas constant R is 8.3143 J/mol·K, the absolute temperature T is 378 K, and cos α=1 because the contact angle α is 0°.

As shown in Fig. 4, when the acetic acid vapor of 105°C under normal pressure (under the condition of p/ps-1) passes through pores of not more than 10 nm, the capillary condensation will result. On the other hand, when the steam and the pores are heated up to 130 °C under the normal pressure condition, the pIps becomes 0.398, and it can be said that the capillary condensation does not take place at pores of not less than 0.5 nm in accordance with the curve in Fig. 4.

As in the case of water vapor, even in the case of the vapor of aqueous solution which includes the organic acid, it is possible to lower the pore size to which the capillary condensation can take place, by increasing the temperature of the vapor, which brings the p/ps value to decrease, in accordance with Fig. 4.

Therefore, in the present invention, based on the result of calculation using the Kelvin equation (Formula 1), the temperature condition and the pressure condition under which the capillary condensation does not take place are determined, and under such conditions the steam is brought to contact with the zeolite. By such a procedure, the collapse of zeolite crystalline skeletal structure is repressed and Lhe degression in the characteristics of the zeolite crystal is prevented, and thus, it is possible to utilize the zeolite crystal to the separation of a component in a mixed composition which includes organic acid.

Incidentally, the occurrence of capillary condensation is what the water vapor (gas) becomes water (liquid) on the zeolite crystal. When the capillary condensation takes place for the mixed composition in which water and organic acid are included, the organic acid is dissolved in the condensed liquid water, and activated by causing ionization. The activated organic acid can easily collapse the skeletal structure of the zeolite crystal which possesses a low Si/Al, such as the A type zeolite.

With respect to the individual mixed composition to be applied to the component separation, in order to determine the temperature at which the capillary condensation does not take place, a graph of showing the relation between the pore size and the P/Ps such as Fig. 2 or Fig 4 is prepared by using the Kelvin equation (Formula 1) and setting the pressure condition at heating and the absolute temperature T at which the vaporization of the mixed composition is caused, to the individual values. Then, by using the prepared graph, the temperature at which the capillary condensation does not take place is determined for the pore size of the zeolite crystal.

Next, constituents other than the capillary condensation in the component separation method according to the present invention will be described.

As for the zeolite crystal to be used for the present invention, any zeolite known in the art can be used.

As for the skeletal type of the zeolite crystal, various skeletal types of the zeolite crystal such as the LTA type, the FAU type, the MFI type, Lhe AFI type, and the MOR type, etc. may be used. Among them, the LTA type and the FAU type, etc. are desirably used in this invention.

With respect to the zeolite crystal, owing to the Si/A ratio, the zeolite crystals are classified such as the A type (Si/Al ratio =1), the X type (1< Si/Al ratio <1.5), the Y type (1.5< Si/Al ratio <2), and the MFI type (Si/Al ratio $\geq$ 27), etc., and such various types of the zeolite crystal may be used. Although the Si/A ratio of the zeolite crystal is not particularly limited, high hydrophilic zeolite crystals in which Si/A ratio = about 1-5, more desirably, Si/A ratio - about 1-2, are useful because the method is mainly aimed to separate water.

As for the substitution type for the zeolite crystal, the Na (sodium) substitution type and the K (potassium) substitution type, etc. can be enumerated, and the substitution types in which the cation is in the range of about monovalent to trivalent may be used, although the substitution type of the zeolite crystal is not particularly limited thereto.

As the zeolite crystal, a membranous zeolite which is formed by binding to a porous support such as alumina etc., may be used. Alternatively, powdery zeolite may be used. However, when considering the use to separate a part of the components from the mixed composition, it is desirable to use the membranous zeolite which is formed on a tubular porous support, because the crystal grains are densely adjoined with each other in the membranous zeolite. Although the size of pores in the zeolite crystal depends on the kind and the type of the crystal, it is usually to be in the range of about 4 - 8 A (angstrom).

When the membranous zeolite is used as the zeolite crystal, the method for manufacturing of the membranous zeolite is not particularly limited. However, It is desirable to use the method disclosed in JP 2004-82008 A, for instance. Concretely, this manufacturing method is a method for manufacturing a membranous zeolite in which slurry which includes seed crystals of zeolite is subjected to contact with a porous support in order Lo adhere the seed crystals to the porous support, and wherein the mode (most probable value) in the frequency distribution of particle size of the seed crystals is in the range of 1 nm - 1 $\mu$m, and 99 vol.% of the seed crystals have a particle diameter of not more than 5 $\mu$m. Incidentally, hereinafter, the membranous zeolite is also referred to as zeolite membrane.

The mixed composition which includes water and organic acid may includes other components as far as it includes water and organic acid. As the other components, water soluble organic material such as alcohols, ketons, and so on may be cited. As such mixed composition, a mixture of water and a biomass derived alcohol which is produced by fermenting sugar cane, tubers, cereals, or the like, may be enumerated.

Further, the containing ratio of water, organic acid, and other components is also not particularly limited. In the case that the mixed composition consists only of water and organic acid, to the extent that the water is in the range of about 5 - 50 % by weight and the organic acid is in the range of about 50 - 95 % by weight, the present invention can be preferably applied. Alternatively, in the case that the mixed composition consists of water, organic acid and water soluble organic material, to the extent that the water is in the range of about 5 - 50 % by weight, the organic is in the range of about 0 - 95 % by weight, and the water soluble organic material is in the range of 0 - 95 % by weight, the present invention can be preferably applied. Incidentally, in this description, the unit:"% by weight" may be also indicated as "wt.%".

Further, even if the mixing component is a relatively strong acid of about pH1-3, the present invention is applicable.

As the organic acid, organic compounds which show the characteristics as acid, such as carboxylic acids involving fatty acids, phenols, and sulfonic acids can be cited. Concretely, for instance, formic acid, acetic acid, propionic acid, butyric acid, lactic acid, malic acid, tartaric acid, citric acid, sorbic acid, fumaric acid, malonic acid, succinic acid, oxalic acid , glycollic acid, maleic acid, ascorbic acid, phthalic acid, acetylsalicylic acid, benzoic acid, m-toluic acid, glutaric acid, adipic acid, and pimelic acid, etc. are enumerated as organic acid.

In general, the component to be separated from the mixed composition is water. However, as far as the concentration of the mixed composition can be attained, there is a possibility that a component other than the water may be also separated.

In order to generate the vapor of the mixed composition, the boiling point of the mixed composition should be investigated, and then the mixed composition is subjected to heating, or pressure-reduction so as to generate the vapor.

The temperature at which the capillary condensation of vapor does not occur can be defined as mentioned above with respect to the individual mixed composition system targeted for separation.

In the case that the vapor is heated, the vapor itself can be heated. Alternatively, the zeolite crystal can be also heated while the vapor itself is heated.

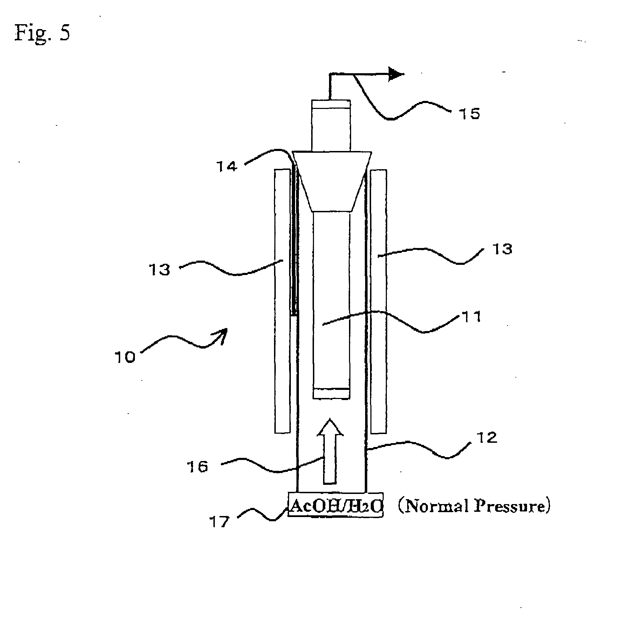

Next, as for one embodiment of the apparatus for separating composition in which the aforementioned method for separating composition can be practiced will be described with reference to Fig. 5.

The apparatus 10 for separating composition which is shown in Fig. 5 is an apparatus 10 for separating a component of a mixed composition which includes water and organic acid by using zeolite crystal 11 and which is characterized in that the zeolite crystal 11 is membranous zeolite 11 where the crystal grains are densely adjoined to each other, and the apparatus comprises a membrane separation device 11 which comprises the membranous zeolite and through which a component of the mixed composition selectively permeates to separate the component from the mixed composition; a vaporizing device 17 by which the vapor 16 of the mixed composition is produced; a vapor heating device 13 by which the vapor 16 of the mixed composition is heated up to a temperature of not inducing the capillary condensation of the vapor 16 of mixed composition when the vapor of the mixed composition comes in contact with the zeolite crystal 11.

Concretely, the component separation apparatus 10 may comprise a zeolite membrane 11 as a membranous separation device, a tube 12 where the zeolite membrane 11 is stored, a ribbon heater 13 which functions as a vapor heating device and which surrounds the tube 12, and a thermo couple 14 which measures the temperature of the ribbon heater 13. The lower end of the zeolite membrane is sealed, and the upper end of thereof is connected to a vacuum pump (See, the numeral 15), in order to be capable of keeping the interior of the zeolite membrane 11 in a vacuum condition. The upper end of the tube 12 is sealed, and from the lower end of the tube 12 the vapor can be introduced into the tube. Further, the vapor 16 thus introduced in the tube 12 and the zeolite membrane 11 are allowed to be heated by the heating of ribbon heater 13. In addition, a vaporizing device 17 for vaporizing the mixed composition which includes water and organic acid is provided below the tube 12.

The constitution of the apparatus for separating component according to the present invention is not limited to one which is shown in Fig. 5, and as far as it is provided with all of a membranous separation device, a vaporizing device, and a vapor heating device, it may take any other constitution.

Especially, although in the component separation apparatus shown in Fig. 5 it is aimed that the membranous zeolite itself is heated by the ribbon heater 13 up to the temperature of not inducing the capillary condensation of the vapor, an alternate embodiment where the vaporizing device and the vapor heating device are fused in one whole, and by which device only the vapor is heated, is also adaptable.

Examples

With respect to the above mentioned zeolite crystal, the present invention will be described with referring to Examples and Controls.

(Examples 1, 2)

To begin with, LTA type zeolite powder was pelletized. Next, acetic acid aqueous solution of pH 4 was boiled under the normal pressure, and then, the generated vapor was allowed to contact with the obtained zeolite pellets, and the vapor and the zeolite pellets were heated up to 130°C which is the temperature of not inducing the capillary condensation of the solution. Thereafter, at this temperature, the LTA type zeolite pellets were used to a treatment for 20 hours, and this treatment was denoted as Example 1. Separately, the LTA type zeolite pellets were used to a treatment for 100 hours in an analogous fashion, and this treatment was denoted as Example 2.

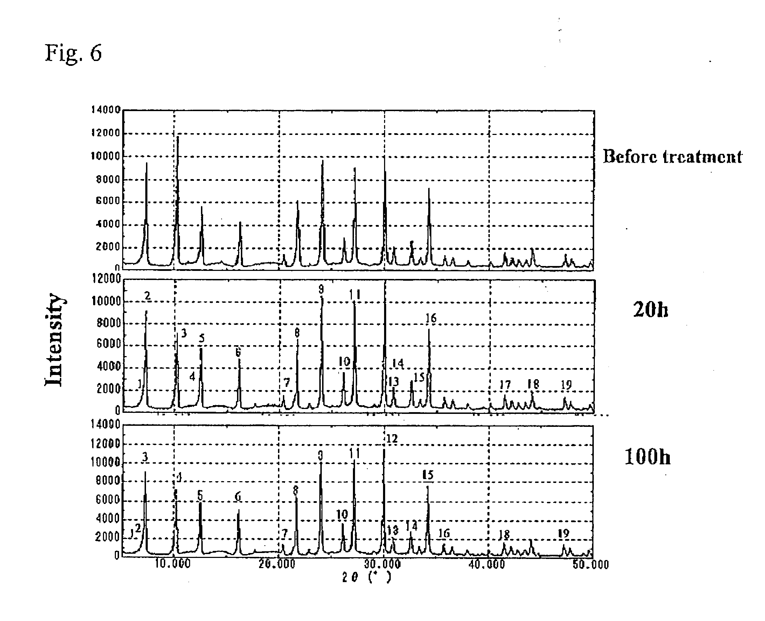

The samples treated as above mentioned conditions were respectively taken out from individual sample tube, and dried for a night. After drying, the pellets were powdered, and the crystalline structure of the pellets were analyzed by XRD (X-ray diffraction). With respect to the original LTA type zeolite powder which was in advance of the above mentioned treatment, the crystalline structure was similarly analyzed by XRD. The obtained results are shown in Fig. 6 where the horizontal axis shows angle, and the perpendicular axis shows intensity. From Fig. 6, it is found that the pellet in Example 1 which was used to the treatment for 20 hours, and the pellet in Example 2 which was used to the treatment for 100 hours can maintain the same crystalline structure as that of the original LTA type zeolite before treatment.

(Control 1)

For a comparison with Examples 1, 2, a verification experiment on whether the zeolite crystal were dissolved to acid was performed. To 950 g of water, 1g of the LTA type zeolite powder was added and stirred, and pH of the solution was adjusted to 10.2. To this solution, 10 wt.% acetic acid aqueous solution was added further in order to adjust pH to 4. Consequently, the solution was boiled with stirring for 1 hour, and this treatment was denoted as Control 1.

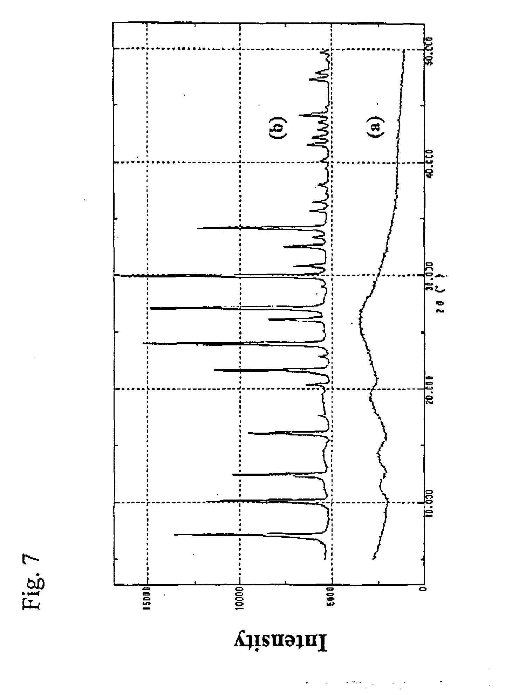

After boiling, the remained solid were filtered out, and the collected solid was dried at the room temperature for a night. The structure change in the boiled LTA type zeolite powder was analyzed by XRD. The obtained result is shown in Fig. 7 where the horizontal axis shows angle, and the perpendicular axis shows intensity. Fig. 7 (a) shows the analysis result of Control. 1 that is after the boiling treatment, and Fig. 7(b) shows the analysis result of Example 1 that is in the case of treating at 130 °C for 20 hours. In Fig. 7, it is observed that after the boiling treatment, the sharp peaks of the LTA type zeolite disappear, but a broadly spectrum throughout its angles is presented. From this result, it can be found that the crystalline structure of the LTA type zeolite was destroyed, and transformed to amorphous phases. As mentioned above, it is obvious that the crystalline structure of the LTA type zeolite in the acetic acid aqueous solution, pH 4, is changed by boiling. Incidentally, such results were equally observed both in the powdery LTA type zeolite and in the membranous LTA type zeolite.

(Example 3)

A zeolite membrane that the LTA type zeolite crystals were densely formed on the tubular alumina porous support was prepared. In detail, this zeolite membrane was prepared as follows.

To begin with, A type zeolite particles (particle size of 100 nm) was added to water and then stirred in order to prepare a slurry of 0.5 wt. % in concentration. To the slurry, a tubular porous support made of $\alpha$-alumina (mean pore size of 1.3 $\mu$m, 10mm in outside diameter, 6 mm in inside diameter, and 13cm in length) was immersed for three minutes, and then it was pulled out at the speed of about 0.2cm/s. Then, it was dried in a thermo-regulated chamber of 25°C for two hours, and additionally, dried in another thermo-regulated chamber of 70 °C for 16 hours. Separately, sodium silicate, aluminum hydroxide, and distilled water were mixed so that mole ratio of the respective components satisfies the conditions of $SiO_2/Al_2O_3=2$, $Na_2O/SiO_2=1$, and $H_2O/Na_2O=75$, in order to obtain a hydrothermal reaction solution. To this reaction solution, the aforementioned porous support on which the seed crystals had been attached was immersed, and left in the reaction solution at 100 °C for 4 hours. As a result, on the surface of the porous support, zeolite membrane was created. Consequently, on the tubular porous support, a crystal layer of the A type zeolite having a uniform film thickness was formed.

The thickness of the formed zeolite film is about 5 $\mu$m. When a dewatering test (pervaporation test at 75°C) from the mixture solution of ethanol/water (ethanol : 90 wt.% and water: 10 wt.%) by using this zeolite film was performed, it was found that the permeation rate (Q) and the separation coefficient ($\alpha$) which are indexes of the dewatering performance were Q=3.5kg/m$^2$hr, and $\alpha$-10000, respectively.

In the testing apparatus shown as the above mentioned Fig. 5, as the zeolite membrane the above mentioned zeolite membrane formed on the tubular porous support was used, and the dewatering test of separating water from the acetic acid vapor was performed.

In this test, the acetic acid vapor was generated by vaporizing a acetic acid aqueous solution which includes acetic acid and water each in the amount of 50 wt.%, pH 2.6, under the normal vapor condition. Since the condition that this solution did not cause the capillary condensation on the zeolite membrane 11 was 130 °C, the acetic acid vapor and the zeolite membrane 11 was heated to 130 °C (The temperature determined by the thermocouple 14 was 130 °C). Under this condition, the dewatering test using the LTA type zeolite membrane 11 and from the acetic acid vapor 16 was performed, and this test was denoted as Control 1.

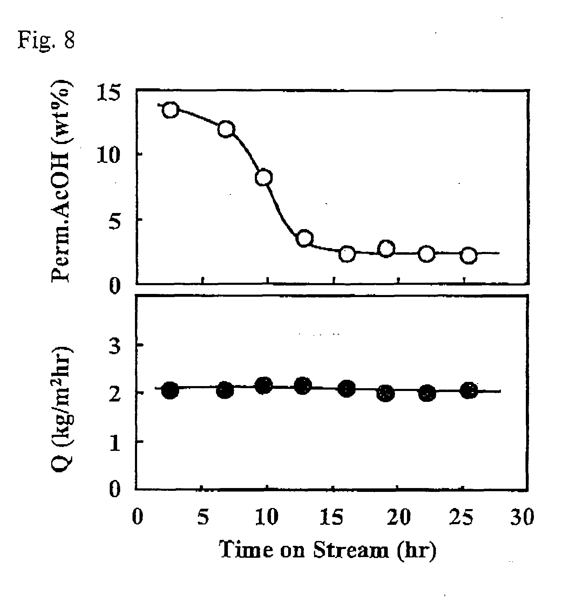

The substance which penetrated through the zeolite membrane 11 was collected by using a trapping tube under the temperature of liquid nitrogen. Then, the weight of the trapped liquid was determined in order to estimate the unit area of the zeolite membrane and the permeation rate per unit time, Q (kg/m$^2$hr). In addition, the composition of the trapped liquid was examined by gas chromatography. The results are shown in Fig. 8. Incidentally, the permeation rate along the elapsed time Q is shown at the lower column of Fig. 8, and the acetic acid content by percentage (wt. %) in the permeated liquid is shown at the upper column of Fig.8.

As shown in Fig. 8, in the dewatering test using the zeolite membrane and from the acetic acid vapor under the condition of not inducing the capillary condensation, the permeation rate Q and the composition of the permeated liquid are stable during a long period. Further, in the composition of the permeated liquid, the ratio of the acetic acid is lowered, thus, the selective permeation of water is denoted. Incidentally, as shown in the upper column of Fig. 8, at the initial stage of the test, in the composition of the permeated liquid, the ratio of the acetic acid is temporarily high and thus instable. However, such a phenomenon will be ordinary caused in zeolite membrane.

(Control 2)

The dewatering test as shown in Example 3 was repeated except that the zeolite membrane 13 was warmed at the level of the vapor temperature with the ribbon heater 13, and this test was denoted as Control 2. In this test, the temperature determined by the thermocouple 14 was 105 °C, and the temperature of the vapor was about 105 °C.

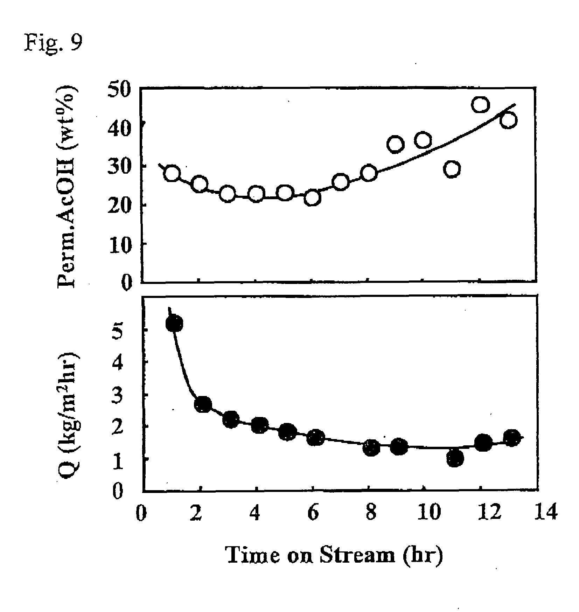

With respect to Control 2, the permeation rate Q and the composition of the trapped liquid were determined in the same manners as Example 3, and obtained results are shown in Fig. 9. Incidentally, the permeation rate along the elapsed time Q is shown at the lower column of Fig. 9, and the acetic acid content by percentage in the permeated liquid is shown at the upper column of Fig.9. In this case, although the permeation rate Q was stable during a long period, the acetic acid concentration in the composition of the permeated liquid increased with the passage of time, and at last it became the same composition with the acetic acid vapor (i.e., water 50 wt.% and acetic acid 50 wt.%).

(Structural Analysis for Example 3 and Control 2)

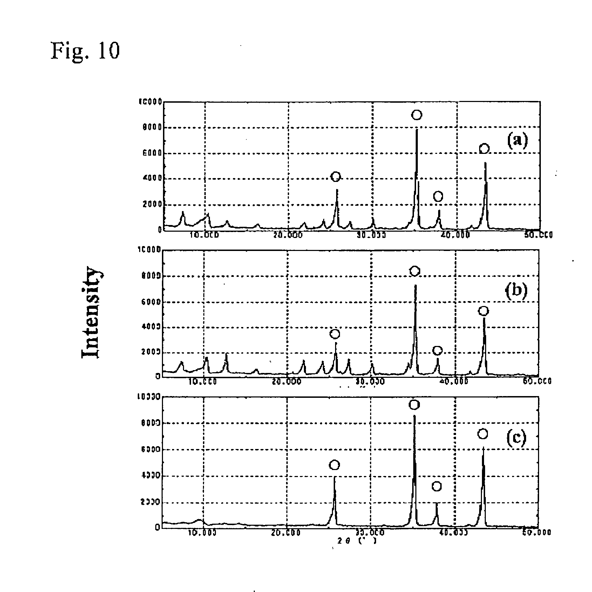

In order to confirm the structural difference between the zeolite membranes used in Example 3 and Control 2, the structural analysis by XRD was performed. The results are shown in Fig. 10. Fig. 10 upper column (a) shows the structural analysis result for the zeolite membrane before the dewatering test, Fig. 10 middle column (b) shows the structural analysis result for the zeolite membrane after the dewatering test of Example 3, and Fig. 10 lower column (c) shows the structural analysis result for the zeolite membrane after the dewatering test of Control 2.

In Fig. 10, with respect to the zeolite membrane 11 of Example 3 which was used in the dewatering test under the condition of not inducing the capillary condensation by heating with the ribbon heater 13, the clear diffraction peaks owing to the LTA type zeolite crystal were observed, and a XRD spectrogram similar with that of the zeolite membrane before using was obtained (See, Fig. 10 (a), (b)). From this result, it can be found that the crystalline structure of the LTA type zeolite does not destroyed even after the dewatering test of acetic acid vapor in Example 3.

In contrast to this, with respect to the case of Control 2 where the dewatering test was performed without heating by ribbon heater 13, it was observed that the clear diffraction peaks owing to the LTA type zeolite disappeared. From this result, it can be found that the crystalline structure of the zeolite crystal was destroyed by the dewatering test of acetic acid vapor in Control 2. Therefore, as shown in Fig. 9, it is considered that the water separation capability of the zeolite became low, and the composition of the permeated liquid in the dewatering test changed to be rich in acetic acid with the passage of time.

As described above, by contacting the acetic acid vapor with the zeolite crystal under the condition of not inducing the capillary condensation, it is possible to prevent the acid included in the mixed composition from ionizing, and then prevent the skeleton structure of the zeolite crystal from being destroyed by the acid. As a result, the dewatering from the above mentioned mixed composition by using the zeolite crystal can be performed while maintaining the properties of the zeolite crystal stably for a long term.

Although the vaporizing test were made by using the mi xed composition of acetic acid and water in the above Examples, the organic acid component is not limited to the acetic acid. Further, when the present invention is applied to the composition separation from the mixed composition of organic acid, water and an organic material, the function and effects of the present invention can show more effectively, because in such a case the deteriorating action to the properties of zeolite crystal becomes moderate as compared with that in the case of the mixed system of organic acid and water.

In addition, this invention is not limited to the above mentioned embodiments. The above mentioned embodiments arc only for the purpose of illustration, and it should be noted that anything which has substantially same constitution with the technical idea claimed in the annexed Claims and provides substantially same functions and effects must be involved in the technical range of the present invention.

**Claims**

1. A method for separating a component from a mixed composition which includes water and organic acid by using zeolite crystal,
   which is **characterized in that** the mixed composition is brought into vapor; and the vapor of the mixed composition is heated up to a temperature of not inducing capillary condensation of the vapor of the mixed composition when the vapor of the mixed composition comes into contact with the zeolite crystal.

2. The method for separating component according to Claim 1, wherein the zeolite crystal is a membranous crystal.

3. The method for separating component according to Claim 1, wherein the zeolite crystal is heated to the temperature of not inducing capillary condensation of the vapor of the mixed composition.

4. The method for separating component according to Claim 2, wherein the zeolite crystal is heated to the temperature of not inducing capillary condensation of the vapor of the mixed composition.

5. An apparatus for separating a component of a mixed composition which includes water and organic acid by using zeolite crystal,
   which is **characterized in that** the zeolite crystal is membranous zeolite, and the apparatus comprises a membrane separation device which comprises the membranous zeolite and through which a component of the mixed composition selectively permeates to separate the component from the mixed composition; a vaporizing device by which the vapor of the mixed composition is produced; a vapor heating device by which the vapor of the mixed composition is heated up to a temperature of not inducing capillary condensation of the vapor of mixed composition when the vapor of the mixed composition comes in contact with the zeolite crystal.

6. The apparatus for separating component according to Claim 5, wherein the vapor heating device heats the membranous zeolite.

Fig. 1

Fig. 2

Fig. 3

Fig.4

Fig. 5

AcOH/H₂O (Normal Pressure)

EP 1 808 222 A1

Fig. 6

Fig. 7

Fig. 8

Fig. 9

Fig. 10

## INTERNATIONAL SEARCH REPORT

| International application No. |
|---|
| PCT/JP2005/014727 |

A. CLASSIFICATION OF SUBJECT MATTER
Int.Cl$^7$ B01D71/02, 53/22

According to International Patent Classification (IPC) or to both national classification and IPC

B. FIELDS SEARCHED

Minimum documentation searched (classification system followed by classification symbols)
Int.Cl$^7$ B01D71/02, 53/22, 53/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | JP 58-8535 A (Union Carbide Corp.),<br>18 January, 1983 (18.01.83),<br>Full text; all drawings<br>& US 4373935 A          & EP 64267 A1 | 1-6 |
| A | JP 10-202072 A (Petroleum Energy Center),<br>04 August, 1998 (04.08.98),<br>Full text; drawings<br>(Family: none) | 1-6 |
| A | JP 8-89769 A (Kyocera Corp.),<br>09 April, 1996 (09.04.96),<br>Full text; drawings<br>(Family: none) | 1-6 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>31 August, 2005 (31.08.05) | Date of mailing of the international search report<br>13 September, 2005 (13.09.05) |
|---|---|
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| International application No. |
| --- |
| PCT/JP2005/014727 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-68629 A  (Kyocera Corp.),<br>07 March, 2003 (07.03.03),<br>Full text; drawings<br>(Family: none) | 1-6 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10216456 A
- JP 2003093828 A
- JP 2004082008 A